# DEMANDE DE BREVET EUROPEEN

(11) **EP 2 998 907 A1**
(43) Date de publication de la demande: **23.03.2016**
(21) Numéro de dépôt: 15190084.2
(22) Date de dépôt: 11.07.2011
(51) Int. Cl.: G06K 19/077

(54) **DISPOSITIF A MICROCIRCUIT COMPRENANT DES MOYENS D'AMPLIFICATION DU GAIN D'UNE ANTENNE**

(30) Priorité: 20.07.2010 FR 1055886
(62) Demande divisionnaire de: 11173386.1
(71) Demandeur: OBERTHUR TECHNOLOGIES, 92700 Colombes (FR)
(72) Inventeur: DUVAL, Agnès, 92700 COLOMBES (FR); LE GARREC, Loïc, 92700 COLOMBES (FR)
(74) Mandataire: Perrot, Emilie

(57) **Abrégé**

Le dispositif électronique (10) comprenant un module (20) à microcircuit (18), une antenne (36) de communication en champ proche raccordée électriquement au microcircuit (18) du module (20), délimitant une surface d'antenne (S), et un corps (12) incorporant le module (20). Plus précisément, l'antenne (36) est agencée sur un support du module (20) et le corps (12) incorpore des moyens (40) d'amplification du gain de l'antenne (36) comprenant un organe (42), électriquement conducteur et isolé électriquement du microcircuit (18) et de l'antenne (36), de forme générale annulaire agencé autour d'une région (R) du corps (12) formant un volume généré par la projection de la surface d'antenne (S) le long d'une direction sensiblement orthogonale (Z) à la surface (S).

## Description

La présente invention concerne le domaine technique des dispositifs électroniques portables de type sans contact comportant une antenne de communication à champ proche connectée à un microcircuit, permettant l'établissement d'une communication sans contact avec un dispositif externe.

L'invention s'applique plus particulièrement mais non exclusivement aux cartes à microcircuit munies d'une antenne, telles que les cartes dites sans contact permettant d'établir une communication sans contact à une fréquence de fonctionnement prédéfinie, par exemple 13,56 MHz définie par la norme ISO 14 443, ou encore les cartes dites hybrides ou duales, permettant d'établir à la fois une communication sans contact et une communication avec contact par l'intermédiaire d'une interface de contacts externes apte à venir en contact avec un lecteur adapté.

L'invention s'applique également à tout type de dispositifs électroniques portables ou de poche incorporant une telle antenne, tels qu'une clé USB, une étiquette RFID (acronyme anglais pour « Radio Frequency IDentity»), un passeport, etc.

L'antenne de communication à champ proche est formée généralement par un fil électriquement conducteur enroulé en une pluralité de spires électriquement conductrices, incorporée en périphérie du corps de la carte afin d'optimiser les dimensions de l'antenne et ainsi la portée du dispositif électronique.

On connaît déjà dans l'état de la technique, notamment du document WO 2008/129526, un dispositif électronique tel qu'une carte à microcircuit de type duale comprenant une antenne raccordée à un microcircuit. La carte comprend un corps muni d'une cavité de réception d'un module portant le microcircuit. Le corps incorpore en outre l'antenne qui est raccordée au microcircuit par l'intermédiaire de deux pastilles métalliques portées par le support.

Un tel raccordement présente l'inconvénient d'être relativement complexe à réaliser notamment du fait de la présence de la jonction entre l'antenne et le microcircuit. La réalisation de cette jonction nécessite l'utilisation d'équipements spécifiques relativement coûteux.

En outre, la jonction obtenue est plus ou moins fiable, notamment parce qu'elle peut être fragilisée au cours d'une flexion ou d'une torsion du corps de carte pouvant conduire à des faux-contacts et des courts-circuits entre les circuits internes du microcircuit et l'antenne.

L'invention a notamment pour but de proposer une carte sans contact comprenant une antenne de communication en champ proche permettant un raccordement fiable de l'antenne et du microcircuit tout en étant simple à réaliser.

A cet effet, l'invention a pour objet un dispositif électronique comprenant un module à microcircuit, une antenne de communication en champ proche raccordée électriquement au microcircuit du module, délimitant une surface d'antenne, et un corps incorporant le module, **caractérisé en ce que** l'antenne est agencée sur un support du module **et en ce que** le corps incorpore des moyens d'amplification du gain de l'antenne comprenant un organe, électriquement conducteur et isolé électriquement du microcircuit et de l'antenne, de forme générale annulaire agencé autour d'une région du corps formant un volume généré par la projection de la surface d'antenne le long d'une direction sensiblement orthogonale à la surface.

L'agencement de l'antenne dans le module permet de faciliter la réalisation de la jonction entre le microcircuit et l'antenne. Un tel agencement de l'antenne permet en outre de s'affranchir des inconvénients classiques liés à un positionnement de cette antenne dans le corps du dispositif. Grâce à l'invention, diverses opérations d'impression, d'embossage, de réalisation d'une piste magnétique sont indépendantes de la position de l'antenne dans le dispositif, ce qui présente de nombreux avantages, notamment dans le cas des applications particulières, telles que dans le domaine des cartes à puce.

Pour maintenir des performances satisfaisantes de l'antenne malgré une réduction de ses dimensions lors de son incorporation dans le module, l'invention propose d'ajouter un organe d'amplification du gain de l'antenne dans le corps. L'ajout d'un tel organe électriquement conducteur augmente de façon significative les performances de l'antenne en canalisant les lignes du champ magnétique émis par un terminal externe à l'intérieur de la surface d'antenne.

En effet, l'organe forme un amplificateur du gain de l'antenne améliorant le niveau de courant induit dans cette dernière ainsi que le niveau de rétro-modulation de l'antenne lorsque le dispositif est placé dans le champ électromagnétique du terminal externe.

Par ailleurs, le positionnement dans le corps de cet organe ne présente pas les inconvénients précités en rapport avec l'agencement de l'antenne dans le corps.

Conformément à l'invention, l'organe s'étend autour de l'antenne à l'extérieur d'une région définie par la projection de l'antenne le long d'une direction sensiblement orthogonale à la surface d'antenne. Ainsi, l'antenne et l'anneau ne doivent pas s'étendre en vis-à-vis l'un de l'autre pour ne pas masquer le flux du champ magnétique à travers la surface d'antenne.

Autrement dit, l'organe s'étend à l'extérieur du contour externe de l'antenne dans un plan parallèle à celui contenant l'antenne ou une partie de l'antenne ou éventuellement dans le même plan. Toutefois, lorsque l'organe s'étend dans le même plan que l'antenne ou qu'une partie de l'antenne, un espace minimal est prévu entre l'organe et l'antenne pour assurer une isolation électrique.

Dans un mode de réalisation préféré, l'organe délimite un bord interne périphérique entourant la région avec une distance minimisée, par exemple inférieure ou égale à cinq millimètres. On a ainsi découvert que plus la distance séparant l'organe et l'antenne est faible, meilleures sont les performances. Ainsi, la distance peut être sensiblement nulle dans le cas où l'antenne et l'organe sont dans des plans distincts.

De préférence, la distance est minimisée dans la limite d'une tolérance de positionnement de l'antenne dans le module.

Dans un mode de réalisation préféré, l'antenne étant formée par un enroulement de spires électriquement conductrices, la tolérance de positionnement de l'antenne dans le module correspond sensiblement à une interspire. Généralement, l'espace entre deux spires est limité par la précision de réalisation de l'antenne, par exemple une précision de gravure permettant une isolation électrique des deux spires entre elles.

De préférence, le module comprenant un support portant le microcircuit et l'antenne, la tolérance de positionnement de l'antenne dans le module correspond sensiblement à la tolérance de positionnement de l'antenne sur le support.

Un dispositif selon l'invention peut en outre comporter l'une ou plusieurs des caractéristiques suivantes :
- l'antenne s'étendant en périphérie d'au moins une des faces du support ou des deux faces opposées du support de module ;
- l'organe s'étendant dans un plan comprenant l'antenne ou au moins une partie de l'antenne ;
- le corps étant muni d'une cavité de réception du module, l'organe délimitant un bord interne périphérique entourant le module qui affleure au moins partiellement à la surface d'une paroi périphérique de la cavité ;
- la cavité comprenant une zone centrale profonde de réception du microcircuit et une zone périphérique surélevée par rapport à la zone centrale d'appui d'un support de module, l'organe entoure la zone périphérique ;
- l'organe formant un anneau fermé ou interrompu au moins une fois ;
- le dispositif est une carte à microcircuit de type sans contact ou de type duale ;
- l'organe est réalisé dans un matériau métallique de perméabilité magnétique relative inférieure ou égale à un ;
- le matériau métallique est une encre électriquement conductrice.

L'invention a encore pour objet un procédé de fabrication d'un dispositif selon l'invention, comprenant une étape de mise en forme du support du dispositif et une étape de formation de la cavité dans le corps, **caractérisé en ce que,** lors de l'étape de mise en forme du corps, on agence une couche électriquement conductrice dans le corps de manière à ce que, lors de l'étape de formation de la cavité, la cavité traverse la couche électriquement conductrice pour former l'anneau.

Un procédé selon l'invention peut en outre comprendre l'une ou l'autre des caractéristiques selon lesquelles :
- la couche s'étend transversalement sur la totalité de la surface du corps ;
- le corps étant formé par une structure multicouche, la couche électriquement conductrice est intercalée entre deux couches du corps ;
- la couche électriquement conductrice est imprimée sur une des couches du corps avec une encre électriquement conductrice par exemple par sérigraphie sur une des couches du corps.

D'autres caractéristiques et avantages de l'invention apparaîtront à la lumière de la description qui suit, faite en référence aux dessins annexés dans lesquels :
- la figure 1 représente un dispositif électronique, tel qu'une carte, selon un premier mode de réalisation de l'invention ;
- la figure 2 représente une vue en coupe de la carte de la figure 1 ;
- les figures 3 et 4 représentent respectivement des vues de dessus et de dessous d'un module électronique du dispositif des figures 1 et2;
- la figure 5 représente une étape du procédé de fabrication du dispositif des figures 1 à 4 ;
- la figure 6 représente un dispositif électronique selon un deuxième mode de réalisation de l'invention ;
- la figure 7 représente une étape d'un procédé de fabrication du dispositif de la figure 6 ;
- la figure 8 représente une première variante du dispositif des figures 1 et 2 ;
- la figure 9 est un graphique comprenant une courbe représentant l'évolution de la portée du dispositif de la figure 1 en fonction de la distance séparant l'antenne et l'organe du dispositif ;
- la figure 10 est un graphique comprenant une courbe représentant l'évolution de la portée du dispositif électronique de la figure 1 en fonction de la largeur d'un organe annulaire d'amplification du gain d'une antenne du dispositif ;
- la figure 11 représente une deuxième variante du dispositif des figures 1 et 2 ; et
- les figures 12 à 15 représentent des organes pouvant être utilisés dans l'invention.

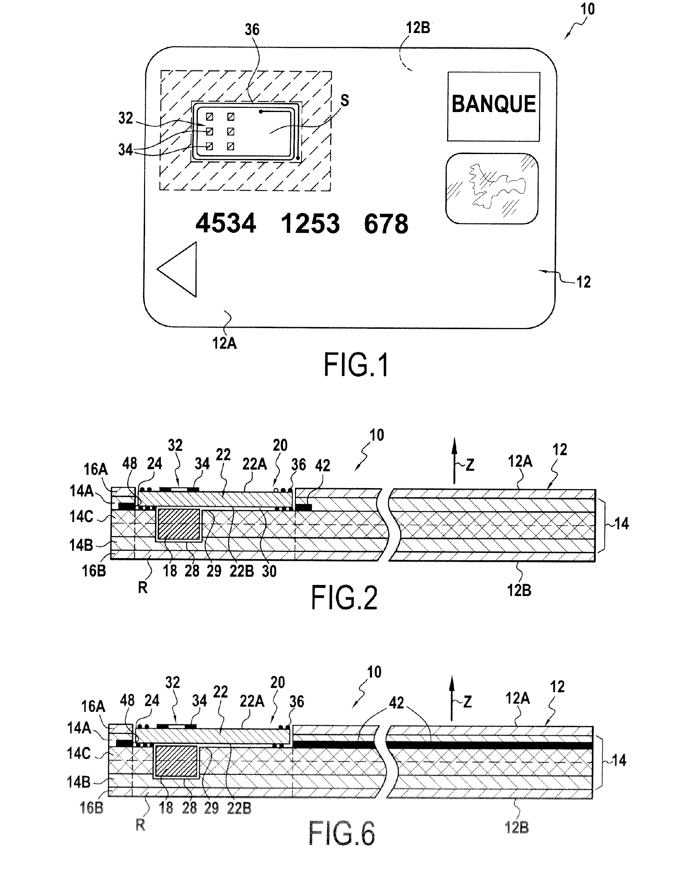

On a représenté sur **la** **figure 1** un dispositif à microcircuit selon l'invention. Ce dispositif est désigné par la référence générale 10.

Dans l'exemple décrit, le dispositif à microcircuit 10 est une carte à microcircuit. En variante, le dispositif 10 peut être une page d'un passeport telle que la couverture du passeport ou encore une étiquette autocollante telle qu'un « sticker ».

Comme cela est illustré sur **la** **figure 1****,** le dispositif 10 comprend un corps 12 en forme générale de carte délimitant des première 12A et deuxième 12B faces opposées.

Dans ce mode de réalisation, le corps 12 délimite les dimensions extérieures de la carte 10. Dans cet exemple et de préférence, les dimensions de la carte 10 sont définies par le format ID-1 de la norme ISO 7816 qui est le format classiquement utilisé pour les cartes bancaires de dimensions 86 mm par 54 mm et d'épaisseur sensiblement égale à huit cent micromètres. Bien entendu, d'autres formats de cartes peuvent également être utilisés.

De préférence, le corps de carte 12 est mis en forme par lamination, c'est-à-dire par formation, par exemple au moyen d'une presse et dans une opération de lamination à chaud, d'une pile de couches ou feuilles laminées par exemple réalisées en matériau thermoplastique.

De préférence, le corps 12 comprend une pile d'au moins trois couches: une couche centrale 14 formant couche d'impression de données intercalée entre deux couches externes transparentes 16A, 16B. Dans le mode de réalisation illustré sur **la** **figure 2****,** la couche centrale 14 d'impression de données est formée elle-même de trois sous-couches, une sous-couche centrale 14C formant « inlay » intercalée entre deux autres sous-couches d'impression de données 14A, 14B. Les deux couches externes 16A, 16B sont sont dites « overlay » et ont par exemple pour fonction de protéger les données imprimées sur la couche centrale 14C. Par exemple, le corps a une épaisseur de huit cent micromètres et les couches externes 16A, 16B ont une épaisseur sensiblement comprises entre quarante et quatre-vingt micromètres. Les sous-couches 14A, 14B, 14C ont des épaisseurs comprises entre 200 et 350 micromètres.

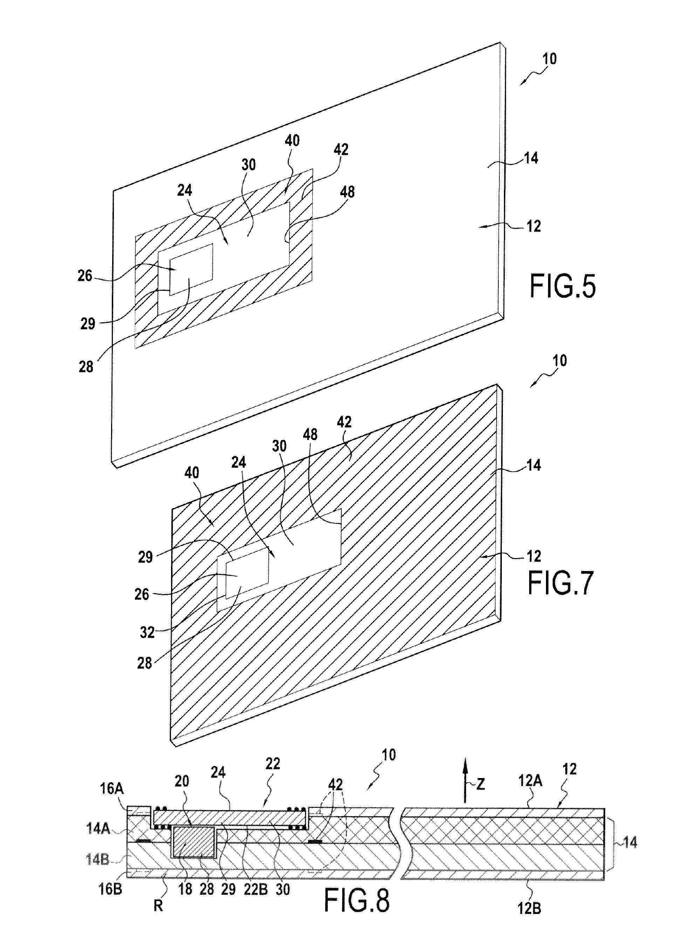

Dans la variante illustrée par **la** **figure 8****,** le corps 12 peut comprendre une couche centrale 14 comprenant deux sous-couches 14A et 14B, l'ensemble des deux couches étant intercalé entre deux couches transparentes 16A, 16B. Plus généralement, la couche centrale 14 peut comporter une sous-couche ou plus de deux sous-couches.

Par exemple, les couches 14, 16 sont réalisées dans un matériau comprenant essentiellement une matière plastique telle que du polycarbonate, du PVC, etc.

En variante, le corps 12 peut être mis en forme par moulage, par exemple de matière plastique.

De façon classique, le dispositif 10 comprend un microcircuit 18 apte à échanger avec un terminal externe, à traiter et/ou à mémoriser des données. Conformément à l'invention, le corps 12 incorpore un module à microcircuit 20 comportant le microcircuit 18.

Dans l'exemple décrit, le module 20 comprend un support 22 portant le microcircuit 18. Ainsi, comme cela est illustré sur **la** **figure 2****,** le support 22 délimite des première 22A et deuxième 22B faces opposées, dites respectivement face externe et face interne, la face externe 22A étant tournée vers l'extérieur de la carte 10. Le support 22 est, par exemple, réalisé en fibre de verre de type époxy, en polyester ou bien en papier et a une épaisseur comprise par exemple entre cinquante et deux cent micromètres. De préférence, le support 22 est réalisé dans une matière plastique à base essentiellement de polyimide avec une épaisseur d'environ soixante-dix micromètres.

En outre, dans cet exemple, comme cela est illustré par **la** **figure 2****,** le corps 12 comprend une cavité 24 de logement du module 20. Cette cavité 24 est de préférence ménagée dans le corps 12 et débouche sur une des faces 12A, 12B du corps 12, par exemple la première face 12A.

Dans une variante non illustrée sur les figures, le module 20 peut être incorporé dans le corps 12 par exemple pour former un dispositif de type sans contact. Dans ce cas, le module 20 peut être rendu invisible de l'extérieur par opacification, par exemple avec une encre opaque, des couches l'entourant.

Comme cela est illustré sur **la** **figure 5****,** la cavité 24 comprend par exemple une zone centrale profonde 26 munie d'un fond 28 pour le logement du microcircuit 18 et une zone périphérique surélevée 30 par rapport à la zone centrale 26 délimitant un gradin 29 avec le fond 28. Cette zone périphérique 30 comprend une surface d'appui surélevée par rapport au fond de la cavité 24 sur laquelle reposent les bords du support 22 du module 20 **(****figure 2****).**

Une telle cavité 24 est généralement obtenue par usinage, typiquement par fraisage ou lamage en deux opérations :
- un grand lamage pour former la zone périphérique 30 correspondant à la profondeur du gradin,
- un petit lamage pour former la zone centrale 26 plus profonde.

Afin de communiquer avec un terminal externe, la carte 10 comprend par exemple une interface externe 32 de plages de contact 34 raccordée électriquement au microcircuit 18. Cette interface 32 permet l'établissement d'une communication avec contact de la carte 10 avec un autre terminal externe, par exemple lorsque la carte 10 est insérée dans un lecteur de carte adapté.

Dans l'exemple décrit, l'interface 32 comprend une série de plages 34 métalliques de contacts électriques, conformes à une norme prédéfinie de carte à microcircuit. Par exemple, les plages de contacts sont conformes à la norme ISO 7816. Dans ce mode de réalisation, les contacts 34 de l'interface 32 correspondent aux contacts C1, C2, C3, C5, C6, C7 de la norme ISO 7816.

L'interface 32 de la carte 10 est de préférence réalisée dans une couche de matériau métallique tel que du cuivre mais peut également être réalisée, en variante, par sérigraphie d'encre conductrice de type encre époxy chargée de particules d'argent ou d'or ou par sérigraphie d'un polymère électriquement conducteur. De façon classique, les plages sont raccordées électriquement au microcircuit 18 par des fils électriquement conducteurs tels que par exemple des fils d'or traversant des via ménagés dans le support du module, eux-mêmes raccordés à des pistes électriquement conductrices de liaisons s'étendant sur la face interne du support.

Dans ce mode de réalisation, la carte 10 est de type duale, c'est-à-dire qu'elle comprend à la fois une interface sans contact apte à établir une communication en champ proche avec un terminal externe et une interface avec contact apte à établir une communication avec un autre terminal externe par contact. Toutefois, dans une variante non illustrée, la carte peut être uniquement de type sans contact. Dans ce cas, la carte 10 est de préférence dépourvue de l'interface 32 de contacts externes 34.

A cet effet, pour l'établissement d'une communication sans contact avec un terminal externe, tel qu'un lecteur externe, le dispositif 10 comprend encore une antenne de communication en champ proche 36 raccordée électriquement au microcircuit 18. L'antenne 36 comprend un contour externe délimitant une surface d'antenne S.

Conformément à l'invention, l'antenne 36 est agencée dans le module 20.

De préférence, l'antenne 36 est formée par un enroulement de spires électriquement conductrices. Par exemple, l'antenne 36 est formée par une piste en cuivre. L'antenne 36 comprend de préférence une pluralité de spires possédant chacune une largeur de l'ordre de cinquante à trois cent microns et l'espacement entre deux spires contigües est de l'ordre de cinquante à deux cent micromètres. On notera par interspire l'espacement minimal entre deux spires de l'antenne 36.

De préférence, l'antenne 36 s'étend sur le support 22 et est formée par un enroulement de spires électriquement conductrices s'étendant en périphérie d'une des faces du support 22, par exemple la face interne 22B.

L'antenne 36 est par exemple réalisée par dépôt d'un métal, selon une technologie de gravure ou de sérigraphie. Eventuellement, en variante, l'antenne 36 peut être également formée par un fil électriquement conducteur dans une gaine isolante.

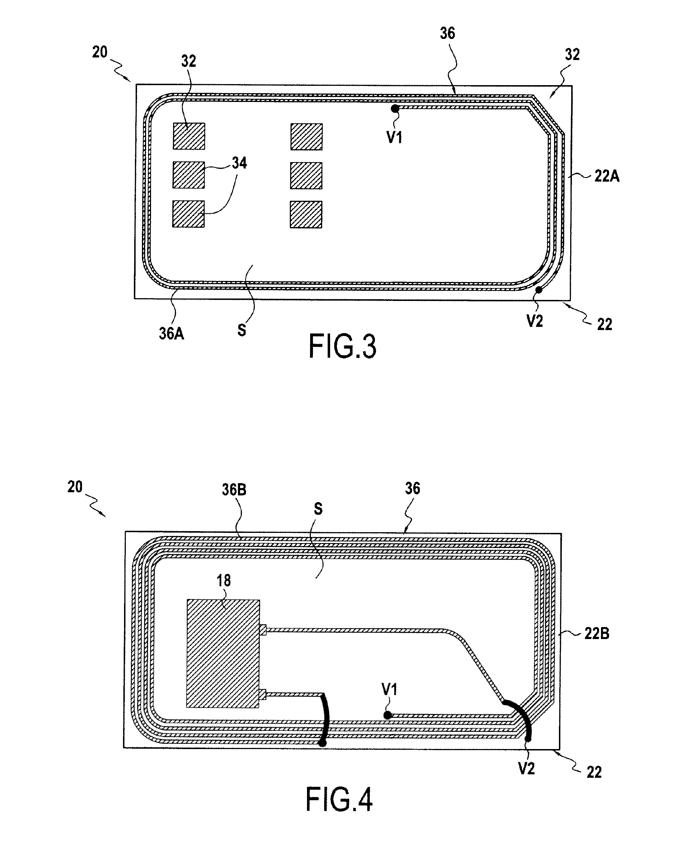

Dans le mode de réalisation de l'invention, comme cela est illustré par **les** **figures 3 et 4****,** l'antenne 36 s'étend en deux parties 36A, 36B et en périphérie des deux faces opposées 22A, 22B du support 22 de module 20, les deux parties 36A, 36B étant raccordées électriquement entre elles par au moins un via V1, V2 traversant le support 22 du module 20.

Par exemple, la partie 36A d'antenne s'étend sur la face opposée 22A à la face 22B portant le microcircuit 18 et entoure l'interface 34. Le support 22 de module 20 a par exemple une forme générale rectangulaire et l'antenne 36 longe la périphérie du support 22. En variante, le support 22 peut avoir une forme oblongue quelconque. De préférence, le support 22 présente des dimensions compatibles avec les procédés de fabrication connus et utilisés pour fabriquer des cartes à microcircuit, que ce soit en longueur, en largeur ou en épaisseur.

L'antenne 36 est dans ce mode de réalisation formée par un enroulement de spires électriquement conductrices s'étendant en périphérie d'une des faces 22A, 22B du support 22 de module 20.

De préférence, la distance séparant l'antenne 36 d'un contour externe de la face 22A, 22B du support 22 est inférieure ou égale à une interspire, c'est-à-dire la distance d'espacement minimale entre deux spires de l'antenne 36.

Conformément à l'invention, le corps 12 incorpore également des moyens 40 d'amplification du gain de l'antenne 36 comprenant un organe 42 électriquement conducteur et isolé électriquement du microcircuit 18 et de l'antenne 36. L'homme du métier comprendra que la fonction de cet organe 42 est de concentrer ou diriger les lignes de champs provenant du lecteur vers l'antenne 36.

Cet organe 42 a, conformément à l'invention, et comme cela est illustré sur **les** **figures 1 et 2****,** une forme générale annulaire et est agencé pour entourer une région R du corps 12 formant un volume généré par la projection de la surface d'antenne le long d'une direction sensiblement orthogonale à la surface d'antenne S. De préférence, le volume est également limité par le contour du corps 12. Dans l'exemple décrit, la surface S s'étend parallèlement aux deux faces opposées 22A, 22B du support 22 et la direction orthogonale Z correspond sensiblement à la direction verticale du support 22 et donc du corps 12 de la carte 10.

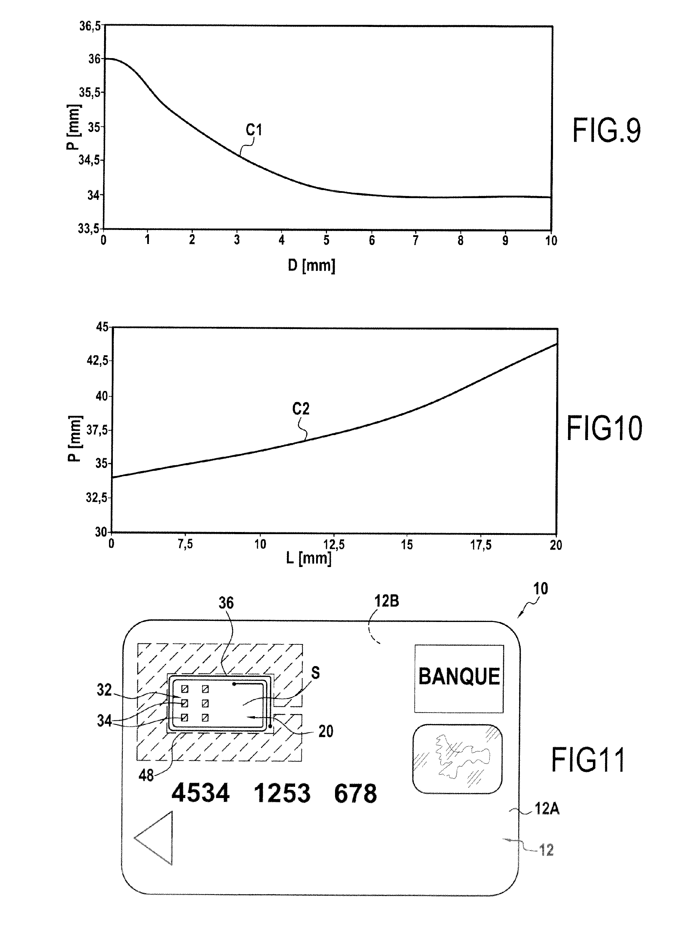

Dans l'exemple décrit, l'organe 42 forme un anneau fermé. L'anneau forme ainsi des moyens de canalisation du flux magnétique généré par le terminal externe à l'intérieur de l'antenne 36 afin d'augmenter le gain de l'antenne. En variante et comme cela est illustré sur **les** **figures 11 à 15****,** l'organe 42 peut former un anneau interrompu au moins une fois. On a en effet découvert que la réalisation d'un anneau ouvert améliorait encore les performances de l'antenne 36.

Dans l'exemple décrit, l'anneau est conformé pour que le dispositif 10 fonctionne à une fréquence de communication avec un terminal externe par exemple de 13.56 MHz. Ainsi, il est tenu compte de la présence de l'anneau pour le réglage de la fréquence de résonance du dispositif.

Comme l'antenne 36 longe le contour externe du support 22 du module 16, la surface d'antenne S correspond sensiblement à la surface du support 22 et la région R a par conséquent une section tranversale correspondant sensiblement à la surface du support 22. L'anneau 42 a de préférence une forme générale entourant le support donc sensiblement rectangulaire.

L'organe 42 est de préférence réalisé dans un matériau métallique de perméabilité magnétique relative inférieure ou égale à un. Par exemple, l'organe 42 est réalisé dans un matériau tel qu'une encre électriquement conductrice. L'encre comprend dans l'exemple décrit un agent liant à base essentiellement de polymère et des pigments métalliques (par exemple de l'argent). Cette encre est destinée à être appliquée de préférence en sérigraphie pour former un film d'épaisseur sensiblement comprise entre dix et vingt micromètres.

Afin d'optimiser les performances de l'antenne 36, l'organe 42 s'étend de préférence au plus près de l'antenne 36 selon une direction sensiblement transversale au corps 12 qui correspond à une direction horizontale du corps 12. Cette amélioration des performances en fonction de la distance transversale entre l'antenne 36 et l'organe 42 est mise en évidence par la courbe C2 du graphique de **la** **figure 10****.**

On voit sur cette courbe C2, que plus la distance D est réduite, meilleure est la portée P, c'est-à-dire la distance de lecture exprimée en millimètre.

De préférence, l'organe 42 délimite un bord interne périphérique 48 entourant la région R avec une distance minimisée, par exemple inférieure ou égale à cinq millimètres. Par exemple, cette distance est minimisée dans la limite d'une précision de positionnement de l'antenne 36 dans le module 16.

Dans cet exemple, la tolérance de positionnement de l'antenne 36 dans le module 16 correspond à la tolérance de positionnement de l'antenne 36 sur le support 22.

Dans l'exemple décrit, l'antenne 36 étant formée par un enroulement de spires électriquement conductrices et l'organe 42 s'étendant dans un même plan que celui contenant l'antenne 36 ou au moins une partie 36A, 36B de l'antenne 36, la distance minimisée est choisie pour assurer une isolation électrique de l'antenne 36 et de l'organe 42.

Par exemple, dans ce cas, la distance minimisée est supérieure ou égale à une interspire.

De préférence, l'organe 42 délimite un bord interne périphérique 48 entourant le module 20, le bord interne 48 affleure au moins partiellement en surface d'une paroi périphérique de la cavité 24.

Ceci permet de limiter la distance, suivant une direction transversale du corps 12, entre l'antenne 36 et l'anneau 42 à la distance séparant le contour externe de l'antenne 36 du bord du support 22 de module 20 dans le cas où les dimensions du support 22 sont sensiblement ajustées à celles de la cavité 24.

Ainsi, lorsque le support 22 est sensiblement en contact avec la paroi périphérique de la cavité 24, c'est-à-dire que les dimensions du support 22 sont sensiblement ajustées aux dimensions de la cavité 24, l'anneau 42 entoure la région R avec une distance correspondant à la distance entre le bord du support 22 et le contour externe de l'antenne 36.

L'organe 42 s'étend, dans cet exemple, sensiblement dans un plan du dispositif comprenant l'antenne 36 ou un plan comprenant au moins l'une des parties 36A, 36B de l'antenne 36 lorsque cette dernière est en deux parties.

Toutefois, en variante illustrée, l'organe 42 peut s'étendre dans un plan sensiblement parallèle à celui ou ceux contenant l'antenne 36, par exemple pour répondre à des contraintes spatiales spécifiques du dispositif 10. Ainsi, sur **la** **figure 8****,** on a représenté différentes positions possibles de l'organe 42 dans le corps 12, l'organe 42 pouvant notamment être dans une position visible de l'extérieur du dispositif par exemple en étant imprimé sur une face visible, au travers de la couche externe 16A ou 16B, d'une couche d'impression de données 14. Pour faire varier la position de l'organe 42 dans le corps 12, par exemple, on fait varier l'épaisseur des couches, par exemple des sous-couches de la couche centrale 14.

Dans cet exemple, l'organe 42 entoure la zone latérale 30 de la cavité 24 dans laquelle s'étend le support 22.

En outre, l'augmentation de la largeur L de l'organe annulaire 42 permet également d'améliorer les performances de l'antenne 36 et notamment la portée P (voir **figure 9**). **La** **figure 9** représente un graphique comprenant une courbe C1 d'évolution de la portée P exprimée en millimètres en fonction de la largeur L de l'organe 42.

Dans ce mode de réalisation, l'organe 42 est à motif plein.

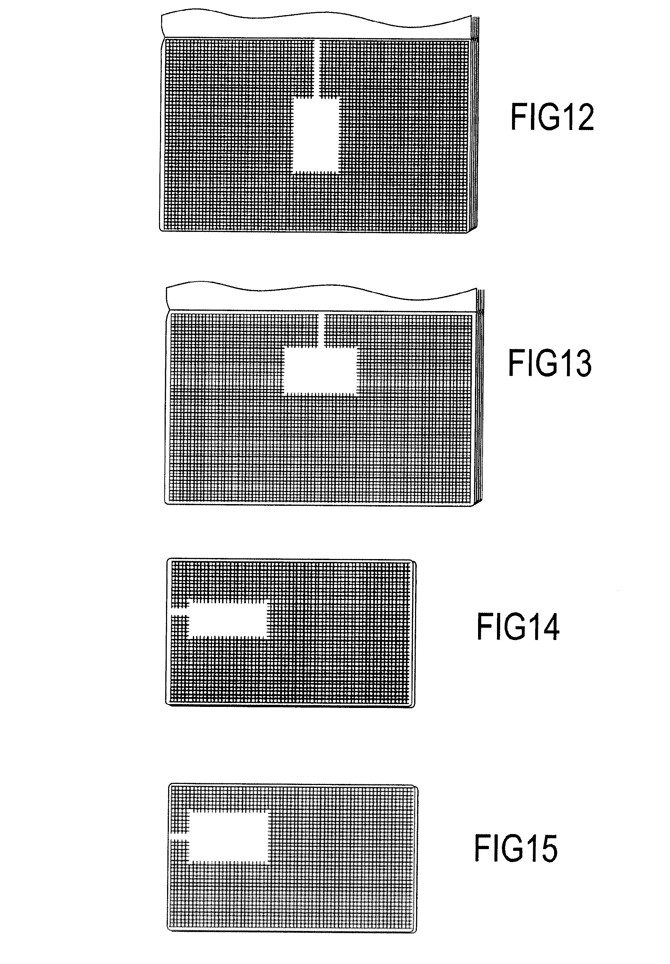

Dans la variante représentée aux figures 12 à 15, l'organe 42 peut être à motif non plein. Par exemple, l'anneau 42 forme une grille ou encore une série d'anneaux concentriques à circonférences croissantes, etc. Cette variante présente l'intérêt de réduire la quantité d'encre conductrice tout en conservant des performances RF équivalentes à celles d'un organe à motif plein. Cette varinate présente aussi l'avantage d'améliorer la liaison entre les couches, un motif en grille permettant d'augmenter la surface de plastique en vis-à-vis.

Sur les figures 12 et 13, l'organe 42 est conçu pour être utilisé dans un passeport. Il présente une dimension sensiblement équivalente à celle d'un passeport et une ouverture principale rectangulaire de dimension 27,2mm x 17,8mm compatible avec la dimension d'un module pour passeport. La position de l'ouverture sur la figure 12 permet d'obtenir des performances RF sans contact optimales. La position de cette ouverture sur la figure 13, en rapprochant l'antenne de la couture du passeport permet de réduire les contraintes mécaniques supportées par l'antenne, au cours des tests d'homologation et lors de l'utilisation du passeport.

Sur les figures 14 et 15, l'organe 42 est conçu pouir être utilisé dans une carte au format ID1. Il présente une dimension sensiblement équivalente à celle d'une carte au format ID1 et une ouverture principale rectangulaire de dimension 27,2mm x 17,8mm ou 27,2mmx13,1mm compatible avec la dimension du module d'une carte au format ID1. L'homme du métier comprendra que la dimension la plus grande améliore les performances RF sans contact.

On va maintenant décrire en référence en référence à **la** **figure 5** un procédé de fabrication du dispositif **des** **figures 1 à 4****.**

Dans un premier temps, le procédé comprend par exemple une étape de mise en forme du support 22 du dispositif 10. Cette étape de mise en forme peut constituer soit en une étape de lamination d'une pluralité de couches entre-elles, soit en une opération de moulage du corps dans une matière plastique.

Lors de cette étape de mise en forme du corps 12, on agence une couche électriquement conductrice dans le corps 12. Cet agencement est prévu de manière à ce que, lors de l'étape de formation de la cavité 24, la cavité 24 traverse la couche électriquement conductrice pour former l'anneau 42. De préférence, lors de l'étape de mise en forme, le corps 12 est formé par une structure multicouche, et la couche électriquement conductrice est intercalée entre deux couches du corps 12.

Par exemple, la couche électriquement conductrice est imprimée sur une des couches du corps 12 avec une encre électriquement conductrice, par exemple par sérigraphie ou par gravure.

De préférence, la couche électriquement conductrice est imprimée sur une couche 14 d'impression de données. Cette couche d'impression de données 14 est délimitée par une face visible de l'extérieur du dispositif portant des données telles que le nom d'une banque ou encore un numéro d'identification d'une carte ou encore toutes données personnelles ou informatives portées par la carte et une face opposée cachée dans le corps 12, et la couche électriquement conductrice est portée par cette face cachée, par exemple pour des raisons esthétiques.

On a représenté sur **les** **figures 6** **et** **7** un dispositif électronique selon un deuxième mode de réalisation de l'invention. Sur ces figures, les éléments analogues **aux** **figures 1 à 5** portent des références identiques.

Dans ce deuxième mode de réalisation, la couche s'étend transversalement sur la totalité de la surface du corps comme cela est illustré sur **la** **figure 7****.** Ce mode de réalisation permet d'obtenir un organe 42 avec une largeur L maximale et donc d'améliorer encore les performances.

Du fait que la cavité 24 est formée après dépôt de la couche électriquement conductrice, l'organe 42 obtenu s'étend au plus près de la paroi périphérique de la cavité 24 et donc de l'antenne 36 selon une direction transversale du corps 12. Il est alors possible d'obtenir un ajustement précis de la position de l'anneau 42 par rapport à l'antenne 36. En effet, l'antenne 36 s'étend en périphérie du support 22 du module 20 par exemple avec une tolérance de positionnement inférieure ou égale à une interspire.

L'organe 42 s'étend autour de la cavité 24 à une distance sensiblement nulle puisque l'anneau 42 affleure à la paroi de la cavité 24. Ainsi, dans le cas où les dimensions du support 22 de module 20 sont ajustées sensiblement aux dimensions de la cavité 24, la distance selon une direction transversale du corps 12 séparant l'organe 42 et l'antenne 36 peut être inférieure ou égale à la tolérance de positionnement de l'antenne 36 sur le support 42, et donc inférieure ou égale à une interspire.

En outre, le dispositif obtenu est plus résistant notamment au pliage du fait du regroupement des composants sensibles tels que l'antenne et le microcircuit dans le module.

L'invention a été décrite plus particulièrement pour une carte au forma ID-1. Elle peut s'appliquer à tout dispositif électronique de poche, portable ou autres, utilisant une antenne de communication en champ proche dont on chercher à augmenter le gain. Par exemple, le dispositif forme un inlay ayant une épaisseur comprise par exemple entre 300 et 400 micromètres.

Il est bien entendu que les modes de réalisation qui viennent d'être décrits ne présentent aucun caractère limitatif et qu'ils pourront recevoir toute modification désirable sans sortir pour cela du cadre de l'invention.

## Revendications

1. Dispositif électronique (10) comprenant un module (20) à microcircuit (18), une antenne (36) de communication en champ proche raccordée électriquement au microcircuit (18) du module (20), délimitant une surface d'antenne (S), et un corps (12) incorporant le module (20), l'antenne (36) étant agencée sur un support (22) du module (20), **caractérisé en ce que** le corps (12) incorpore des moyens (40) d'amplification du gain de l'antenne (36) comprenant un organe (42), électriquement conducteur et isolé électriquement du microcircuit (18) et de l'antenne (36), de forme générale annulaire agencé autour d'une région (R) du corps (12) formant un volume généré par la projection de la surface d'antenne (S) le long d'une direction sensiblement orthogonale (Z) à la surface (S), dans lequel l'organe forme un anneau ouvert.

2. Dispositif (10) selon la revendication précédente, dans lequel l'organe (42) délimite un bord interne périphérique (48) entourant la région (R) avec une distance minimisée, par exemple inférieure ou égale à cinq millimètres.

3. Dispositif (10) selon la revendication précédente, dans lequel l'organe (42) s'étend dans un même plan que l'antenne (36) ou qu'au moins une partie (36A, 36B) de l'antenne (36) et la distance minimisée est choisie pour assurer une isolation électrique de l'antenne (36) et de l'organe (42).

4. Dispositif (10) selon la revendication précédente, dans lequel, l'antenne (36) étant formée par un enroulement de spires électriquement conductrices, la distance minimisée est supérieure ou égale à une interspire.

5. Dispositif (10) selon la revendication 1 ou 2, dans lequel l'organe (42) s'étend dans un plan parallèle à un plan comprenant l'antenne (36) ou au moins une partie de l'antenne (36A, 36B).

6. Dispositif (10) selon la revendication précédente, dans lequel l'antenne (36) s'étendant en périphérie d'au moins une des faces (22A, 22B) du support (22) ou des deux faces opposées (22A, 22B) du support (22) de module (20).

7. Dispositif (10) selon l'une quelconque des revendications précédentes, dans lequel l'organe (42) s'étend dans un plan comprenant l'antenne (36) ou au moins une partie (36A, 36B) de l'antenne (36).

8. Dispositif (10) selon l'une quelconque des revendications précédentes, dans lequel, le corps (12) étant muni d'une cavité (24) de réception du module (20), l'organe (42) délimite un bord interne périphérique entourant le module (20) qui affleure au moins partiellement à la surface d'une paroi périphérique de la cavité.

9. Dispositif (10) selon la revendication précédente, dans lequel la cavité (24) comprenant une zone centrale profonde (26) de réception du microcircuit (18) et une zone périphérique surélevée (30) par rapport à la zone centrale (26) d'appui dudit support de module, l'organe (42) entoure la zone périphérique (30).

10. Dispositif (10) selon l'une quelconque des revendications précédentes, étant une carte à microcircuit de type sans contact ou de type duale ou étant un inlay.

11. Dispositif (10) selon l'une quelconque des revendications précédentes, dans lequel l'organe (42) est réalisé dans un matériau métallique de perméabilité magnétique relative inférieure ou égale à un.

12. Dispositif (10) selon l'une quelconque des revendications précédentes, dans lequel le matériau métallique est une encre électriquement conductrice.

13. Dispositif (10) selon l'une quelconque des revendications précédentes **caractérisé en ce que** ledit organe (42) est à motif non plein.

14. Dispositif (10) selon la revendication 13, **caractérisé en ce que** ledit organe (42) forme une grille ou comporte une série d'anneaux concentriques.

15. Dispositif selon la revendication 14, **caractérisé en ce que** ledit organe (42) est :
- une grille sensiblement de la taille d'une page de passeport et présentant une ouverture principale rectangulaire de dimension 27,2mm x 17,8mm ; ou
- une grille sensiblement de la taille d'une page de carte au format ID1 et présentant une ouverture principale rectangulaire de dimension 27,2mm x 17,8mm ; ou 27,2mmx13,1mm.

16. Dispositif selon l'une des revendications 1 à 15, dans lequel l'organe (42) est formé par la traversée d'une couche par une cavité (24) de réception du module formée dans le corps (12).

17. Dispositif selon l'une des revendications 1 à 15, dans lequel l'anneau est conformé pour que le dispositif (10) fonctionne à une fréquence de communication de 13,56MHz avec un terminal externe.

18. Procédé de fabrication d'un dispositif (10) selon l'une quelconque des revendications précédentes, comprenant une étape de mise en forme du corps (12) du dispositif (10) et une étape de formation de la cavité (24) dans le corps (12), **caractérisé en ce que**, lors de l'étape de mise en forme du corps (12), on agence une couche électriquement conductrice dans le corps (12) de manière à ce que, lors de l'étape de formation de la cavité (24), la cavité (24) traverse la couche électriquement conductrice pour former l'organe (42).

19. Procédé selon la revendication 18, dans lequel, le corps (12) étant formé par une structure multicouche, la couche électriquement conductrice est intercalée entre deux couches du corps (12).

20. Procédé selon la revendication 18 ou 19, dans lequel la couche électriquement conductrice est imprimée sur une des couches du corps avec une encre électriquement conductrice par exemple par sérigraphie sur une des couches du corps.
